# EUROPÄISCHE PATENTSCHRIFT

(11) **EP 1 403 970 B1**
(45) Veröffentlichungstag und Bekanntmachung des Hinweises auf die Patenterteilung: **26.07.2006**
(21) Anmeldenummer: 03019765.1
(22) Anmeldetag: 29.08.2003
(51) Int. Cl.: H01R 9/26, H02B 1/052

(54) **Anordnung zur Befestigung eines Gehäuses an einer Montageschiene**
Device for attaching a housing to a mounting rail
Dispositif d'attachement d' une boîte à un rail de montage

(30) Priorität: 28.09.2002 EP 02021926
(43) Veröffentlichungstag der Anmeldung: 31.03.2004
(73) Patentinhaber: Tyco Electronics AMP GmbH, 64625 Bensheim (DE)
(72) Erfinder: Böck, Werner, 64823 Gross-Umstadt (DE); Szelag, Martin, 64404 Bickenbach (DE); Schmidt, Ralf, 64658 Fürth (DE); Müller, Franz, 64347 Griesheim (DE)
(74) Vertreter: Patentanwaltskanzlei WILHELM & BECK

(56) Entgegenhaltungen:
- GB-A- 2 056 179
- US-A- 4 698 726
- US-A- 5 480 310
- US-B1- 6 292 076
- US-B1- 6 431 909

## Beschreibung

Die Erfindung betrifft eine Anordnung zur Befestigung eines Gehäuses an einer Montageschiene, insbesondere einer genormten Hutschiene.

Es sind Anordnungen zum modularen Aufbau von elektrischen Baueinheiten bekannt. Ein modulares Verbindungssystem für Ethernet-Anwendungen im Industriebereich ist bspw. aus der WO 02/23676 A1 bekannt. Hierbei sind mehrere elektronische Module in einem Gehäuse zusammen gefasst, das auf einer Montageschiene befestigt ist.

Aus dem US-Patent US 6,292,076 B1 der als nãchstliegender Stand der Technik angesehen ist, ist eine Anordnung zur Befestigung einer Gehäusewand an einer Montageschiene bekannt, die ein U-förmiges Profil mit Schenkeln und ausgestellten Schenkelenden aufweist. Die Gehäusewand weist wenigstens eine in eines der ausgestellten Schenkelenden eingreifende Haltelasche auf. Zudem weist die Gehäusewand wenigstens einen, in das gegenüberliegende Schenkelende eingreifenden Rasthaken zur lösbaren Fixierung an der Montageschiene auf. Zudem sind zwei, an jeweils einem Schenkel anliegende und von der wenigstens einen Haltelasche bzw. dem wenigstens einen Rasthaken beabstandete Positionierungslaschen zur möglichst spielfreien Lagefixierung der Gehäusewand an der Montageschiene vorgesehen. Die Positions- und Haltelaschen und die Verriegelungseinrichtung befinden sich auf der Seite, die der Montageschiene zugewandt ist.

Aus dem US-Patent US 5,480,310 ist eine Anordnung bekannt, die eine metallische Masseschiene aufweist, an die mithilfe eines Clip-Systems ein Telekommunikations-Verbindungsstecker befestigbar ist. Der Verbindungsstecker weist einen Masseclip auf, der lösbar einen Randbereich der Masseschiene umfasst. Dazu weist der Clip gegenüberliegend angeordnete Finger auf, die einen ersten Randbereich der Masseschiene umfassen. Der Verbindungsstecker weist gegenüberliegend zum Clip einen Rasthaken auf, mit dem der Verbindungsstecker unter einen zweiten Randbereich der Masseschiene eingehakt ist.

Die Aufgabe der Erfindung besteht darin, eine stabile Verriegelung eines Gehäuses mit einer Montageschiene unter Herstellung einer zuverlässigen Masseverbindung zur Verfügung zu stellen, die gegen eine Beschädigung geschützt ist.

Die Aufgabe der Erfindung wird mit dem Gegenstand des unabhängigen Anspruchs 1 erreicht. Merkmale vorteilhafter Weiterbildungen der Erfindung ergeben sich aus den abhängigen Ansprüchen.

Dem gemäß weist eine Anordnung zur Befestigung eines Gehäuses bzw. einer Gehäuserück- oder -seitenwand an einer Montageschiene, die ein U-förmiges Profil mit ausgestellten Schenkelenden aufweist, wenigstens eine Haltelasche und weinigstens einen Rasthaken zur lösbaren Fixierung an der Montageschiene auf. Dabei greift die wenigstens eine Haltelasche in eines der ausgestellten Schenkelenden des U-Profils der Montageschiene ein. Der wenigstens eine Rasthaken greift in das gegenüberliegende Schenkelende des U-Profils ein. Erfindungsgemäß sind weiterhin wenigstens zwei an jeweils einem Schenkel anliegende und von der wenigstens einen Haltelasche bzw. dem wenigstens einen Rasthaken beabstandete Positionierungslaschen zur spielfreien Lagefixierung des Gehäuses bzw. der Gehäuserück- oder -seitenwand an der Montageschiene vorgesehen. Die Montageschiene kann insbesondere eine sog. Norm-Hutschiene sein.

Die Rasthaken sind an einem Schlitten an einer Gehäuseinnenseite befestigt, der gegen die Haltekraft einer Feder in senkrechter Richtung zur Längserstreckungsrichtung der Montage- bzw. Norm-Hutschiene verschiebbar ist. Die Rasthaken sind durch Verschiebung des Schlittens gegen die Haltekraft der Feder aus dem Eingriff mit dem ausgestellten Schenkelende der Schiene bringbar.

Dadurch ist die Verriegelungsmechanik gegen eine Beschädigung geschützt.

Vorzugsweise sind die wenigstens eine Haltelasche sowie die Positionierungslaschen jeweils als gestanzte und ausgestellte Blechlaschen ausgebildet. Eine solche Rückwand lässt sich auf einfache und kostengünstige Weise aus einem Bleckstück herstellen.

Gemäß einer Ausgestaltung der Erfindung sind zwei breitere und voneinander beabstandete Haltelaschen zum Eingriff in ein ausgestelltes Schenkelende der Montage- bzw. Norm-Hutschiene vorgesehen. Weiterhin sind gemäß einer Ausgestaltung der Erfindung zwei voneinander beabstandete Rasthaken zum lösbaren Eingriff in das den Haltelaschen gegenüberliegende ausgestellte Schenkelende der Montage- bzw. Norm-Hutschiene vorgesehen. Diese Ausgestaltung sorgt für einen stabilen Halt und eine zuverlässige mechanische Verbindung mit der Schiene.

Vorzugsweise ist ein an einen Gehäuserand reichender Schieber des Schlittens vorgesehen, der einen Eingriff für einen Schraubendreher, einen Haken oder dgl. aufweist. In entspanntem Zustand der Feder befindet sich der Schieber vorzugsweise innerhalb eines Gehäuseumrisses.

Mittels der erfindungsgemäßen Anordnung kann ein Blechgehäuse mit einer oder mehreren Verbindungsanordnungen zur Kontaktierung von abgeschirmten elektrischen Leitungen mit einer gedruckten Schaltung durch einfaches Einrasten in einer Montage- bzw. Norm-Hutschiene eingehängt und mit einem Schraubendreher als Hebel wieder einfach gelöst werden. Gleichzeitig wird durch die beschriebene Verbindung eine zuverlässige Masseverbindung zwischen Montage- bzw. Norm-Hutschiene aus Metall und dem Blechgehäuse zur Verfügung gestellt. Die Verriegelungsmechanik ist geschützt gegen Beschädigungen, da sie im Gehäuseinneren untergebracht ist.

Die Erfindung wird nachfolgend anhand bevorzugter Ausführungsbeispiele unter Bezugnahme auf die Zeichnung näher erläutert. Dabei zeigt:
Figur 1 ein an einer Montageschiene befestigtes Blechgehäuse,
Figur 2 eine perspektivische Detailansicht einer Verbindung zwischen Blechgehäuse und Montageschiene,
Figur 3 eine mit der Montageschiene verbundene Blechrückwand des Gehäuses,
Figur 4 eine weitere perspektivische Detailansicht der Verbindungsanordnung,
Figur 5 eine Verriegelungseinrichtung zur Fixierung der Bleckrückwand an der Montageschiene und
Figur 6 eine perspektivische Detailansicht der erfindungsgemäßen Verriegelungseinrichtung gemäß Figur 5.

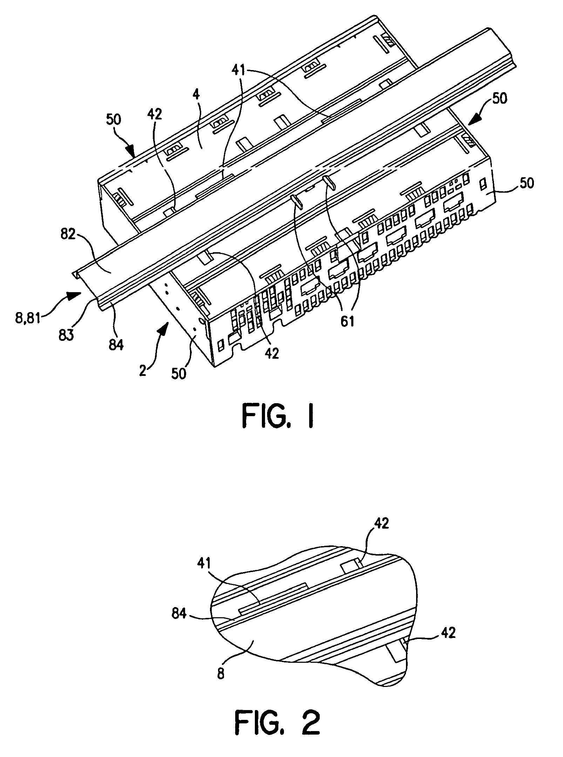

Figur 1 zeigt eine erfindungsgemäße Anordnung zur Fixierung eines Blechgehäuses 2 an einer Montageschiene 8. Die Montageschiene 8 weist ein U-Profil 81 mit gegenüber einer breiteren Basis 82 relativ niedrigen Schenkeln 83 und jeweils nach außen ausgestellten Schenkelenden 84 auf. Eine Gehäuserückwand 4 des Blechgehäuses 2 ist mit der Montageschiene 8 verbunden. Zu diesem Zweck sind an der Gehäuserückwand 4 zwei Haltelaschen 41 vorgesehen, die in ein ausgestelltes Schenkelende 84 eingreifen. Im gegenüber liegenden Schenkelende 84 greifen zwei Rasthaken 61 ein, die für eine lösbare Fixierung der Gehäuserückwand 4 an der Montageschiene 8 sorgen. Als Montageschiene 8 kann insbesondere eine sog. Norm-Hutschiene verwendet werden.

Figur 2 verdeutlicht in einem schematischen Detailausschnitt den Eingriff einer Haltelasche 41 an einem ausgestellten Schenkelende 84 der Montageschiene 8. Weiterhin sind Positionierungslaschen 42 in der Gehäuserückwand 4 vorgesehen, die zu beiden Seiten an die ausgestellten Schenkelenden 84 der Montageschiene 8 grenzen und für eine spielfreie Positionierung des Blechgehäuses 2 an der Schiene 8 sorgen. Die Haltelaschen 41 und die Positionierungslaschen 42 sind vorzugsweise über einen Stanzvorgang aus der Gehäuserückwand 4 gebildet. Vorzugsweise sind die Längsrichtungen der Haltelasche 41 und der Positionierungslasche 42 senkrecht zueinander angeordnet. Die Längsrichtung der Haltelaschen 41 ist parallel zur Längsrichtung der Montageschiene 8 angeordnet. Eine Seitenkante einer Positionierungslasche dient zur Fixierung der Lage der Montageschiene. Durch den Stanzvorgang kann bei der Herstellung der Positionierungslasche 42 mit wenig Aufwand eine präzise Lage der Seitenkante der Positionierungslasche festgelegt werden.

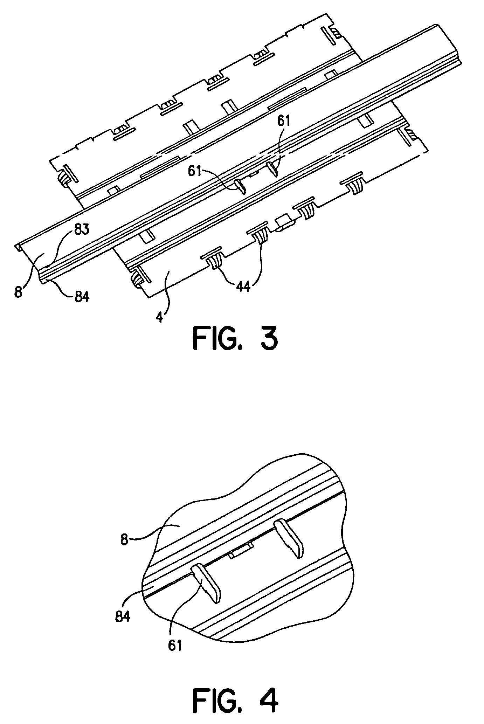

Figur 3 zeigt in einer schematischen Perspektivdarstellung die Gehäuserückwand 4, die mit der Montageschiene 8 verbunden ist. An den Kanten der rechteckigen Gehäuserückwand 4 sind jeweils Federlaschen 44 erkennbar, die für eine lösbare Verbindung mit den Gehäuseseitenwänden des Blechgehäuses 2 sorgen können. Die Federlaschen 44 sorgen zudem bei einem metallischen Gehäuse für eine elektrisch leitende Verbindung und damit für eine gute Abschirmung des Blechgehäuses 2. In Figur 3 sowie in der vergrößerten Darstellung der Figur 4 sind Rasthaken 61 deutlich erkennbar, die in ein ausgestelltes Schenkelende 84 der Hutschiene eingreifen. Die Rasthaken 61 sind an ihrer Oberseite angeschrägt, so dass die Gehäuserückwand 4 gegen die Hutschiene gedrückt werden kann, wobei die Rasthaken 61 mit der abgeschrägten Kante vom ausgestellten Schenkelende weggedrückt werden und bei Anliegen der Gehäuserückwand 4 an der Hutschiene einschnappen können.

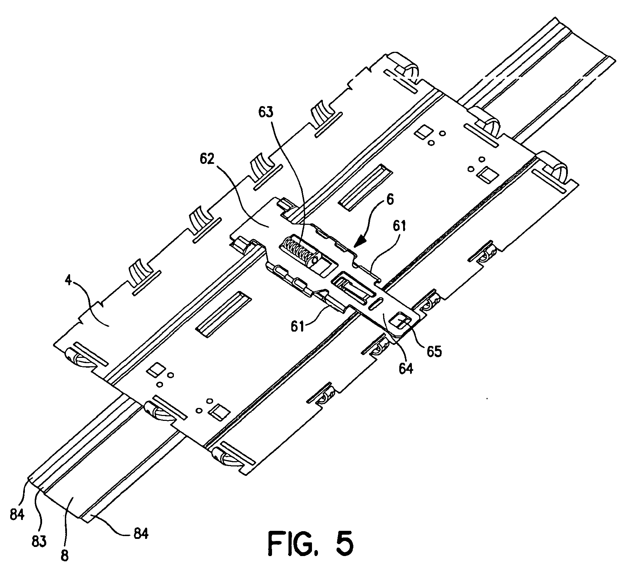

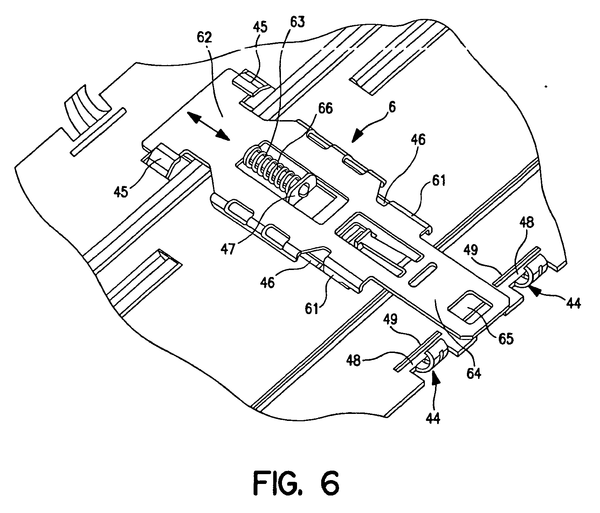

Figur 5 verdeutlicht in einer perspektivischen Darstellung eine Verriegelungseinrichtung 6 zur lösbaren Verriegelung des Gehäuses 2 an der Schiene 8. Die Verriegelungseinrichtung 6 umfasst einen Schlitten 62, der eine zur Längserstreckungsrichtung der Schiene 8 senkrechte Bewegungsrichtung aufweist und der mittels Blechlaschen (45) in der Gehäuserückwand 4 verschiebbar gehalten ist. Die Gehäuserückwand 4 weist Querschlitze 46 auf, die senkrecht zur Längsrichtung der Schiene 8 angeordnet sind. Die Rasthaken 61 sind durch die Querschlitze 46 geführt und die Kanten sind den Schenkelenden 84 zugeordnet, wie in Fig. 4 dargestellt ist. Die Verriegelungseinrichtung 6 weist einen Stift 66 auf, der in Bewegungsrichtung des Schlittens 62 angeordnet ist und in einem Loch einer Gegenlasche 47 der Gehäuserückwand 4 gehaltert ist. Wie anhand der vergrößerten Detaildarstellung der Figur 6 erkennbar ist, wird der Schlitten 62 durch eine Feder 63, die vom Stift 66 geführt ist, in eine Richtung gezogen, bei der die Rasthaken 61 (vg. Figuren 3, 4) in Richtung zur Montageschiene 8 gezogen werden und dort für eine Klemmung der Gehäuserückwand 4 sorgen.

Gegen die Kraft der Feder kann der Schlitten 62 mit einem verlängerten Schieber 64 mittels eines Schraubendrehers oder dgl. verschoben werden, wodurch die Rasthaken 61 aus dem Eingriff mit dem ausgestellten Schenkelende 84 der Montageschiene 8 gebracht werden und wodurch die Gehäuserückwand 4 von der Schiene abgenommen werden kann. Im entspannten Zustand der Feder 63 und damit im verrasteten Zustand der Verriegelungseinrichtung 6 ragt der Schieber 64 nicht über den Umriss des Blechgehäuses 2 hinaus. Die Gehäuserückwand 4 weist im Bereich des Eingriffs 65 des Schiebers 64 eine Aussparung auf, die es ermöglicht einen Schraubendreher oder Haken oder dgl. anzusetzen und den Schieber in Richtung nach rechts (Figur 6) zu ziehen.

Das Gehäuse 2 eignet sich insbesondere zur Aufnahme von sog. Industrial Ethernet Fast Connect Connection Units für industrielle Anwendungen.

Die integrierten Federlaschen 44 an den Kanten der Blechrückwand ermöglichen eine zuverlässige elektrische und mechanische Verbindung zwischen Rückwand und Metallgehäuse, ohne dass zusätzliche Verbindungsteile notwendig wären. Die erfindungsgemäße Verriegelungseinrichtung ermöglicht ein sicheres und schnelles Einhängen und Verriegeln auf der Montageschiene sowie ein einfaches Lösen mit einem Schraubendreher als Hebel. Die kostengünstige und stabile Metallausführung weist nur wenige Einzelkomponenten auf und ermöglicht einen sehr geringen Montageaufwand. Durch die Hakenverrastung ist das Gehäuse gegen unbeabsichtigtes Lösen gesichert. Die Masseverbindung erfolgt im Wesentlichen über die Verriegelungsmechanik. Die Verriegelungsmechanik ist durch die Unterbringung im Gehäuseinneren gegen Beschädigungen geschützt.

Die Federlaschen 44 sind vorzugsweise als Torsionsfederlaschen ausgebildet, wie in Figur 6 dargestellt. Bei dieser Ausführungsform sind die Federlaschen 44 an einem Steg 48 der Gehäuserückwand 4 angeformt. Der Steg 48 ist durch einen Stegschlitz 49 gebildet, der in die Gehäuserückwand 4 eingebracht ist. Der Steg 48 bildet gleichzeitig eine integrierte Torsionsfeder, da der Steg 48 in der Weise ausgebildet ist, dass sich der Steg 48 um die eigene Längsachse beim Verbiegen der Federlaschen 44 beim Einhaken einer Gehäuseseitenwand 50, wie in Figur 1 dargestellt, verdreht. Durch die Torsionsfähigkeit des Steges 48 wird die Federeigenschaft der Federlaschen 44 erhöht, da die Federlaschen vom Steg 48 ausgehen. Somit wird der Auslenkungswinkel der Federlasche 44 erhöht. Die Längsrichtung des Steges 48 ist vorzugsweise senkrecht zur Auslenkungsrichtung der Federlasche 44 angeordnet.

Die Torsionsfederlasche dient zur elektrischen Masseverbindung zwischen der Gehäuserückwand 4 und einer Gehäuseseitenwand 50 zum Zwecke der Abschirmung.

## Patentansprüche

1. Anordnung zur Befestigung einer Gehäusewand (4) an einer Montageschiene (8), die ein U-förmiges Profil (81) mit Schenkeln (83) und ausgestellten Schenkelenden (84) aufweist, wobei die Gehäusewand (4) wenigstens eine in eines der ausgestellten Schenkelenden (84) eingreifende Haltelasche (41) und wenigstens einen, in das gegenüberliegende Schenkelende (84) eingreifenden Rasthaken (61) zur lösbaren Fixierung an der Montageschiene (8) aufweist, wobei wenigstens zwei, an jeweils einem Schenkel (83) anliegende und von der wenigstens einen Haltelasche (41) bzw. dem wenigstens einen Rasthaken (61) beabstandete Positionierungslaschen (42) zur möglichst spielfreien Lagefixierung der Gehäusewand (4) an der Montageschiene (8) vorgesehen sind, wobei die Rasthaken (61) an einem Schlitten (62) befestigt sind, der gegen die Haltekraft einer Feder (63) in senkrechter Richtung zur Längsstreckungsrichtung der Montageschiene (8) verschiebbar ist,
**dadurch gekennzeichnet, dass**
der Schlitten (62) im Gehäuseinneren auf der der Montageschiene abgewandten Seite der Gehäusewand (4) verschiebbar gehalten ist, dass die Gehäusewand (4) senkrecht zur Längsrichtung der Montageschiene (8) angeordnete Querschlitze (46) aufweist, und dass die Rasthaken (61) durch die Querschlitze (46) geführt sind.

2. Anordnung nach Anspruch 1, **dadurch gekennzeichnet, dass** die wenigstens eine Haltelasche (41) als gestanzte und ausgestellte Blechlasche ausgebildet ist.

3. Anordnung nach Anspruch 1 oder 2, **dadurch gekennzeichnet, dass** die Positionierungslaschen (42) jeweils als gestanzte und ausgestellte Blechlaschen ausgebildet sind.

4. Anordnung nach einem der Ansprüche 1 bis 3, **gekennzeichnet durch** zwei breitere und voneinander beabstandete Haltelaschen (41) zum Eingriff in ein ausgestelltes Schenkelende (84) der Montageschiene (8).

5. Anordnung nach einem der vorhergehenden Ansprüche, **gekennzeichnet durch** zwei voneinander beabstandete Rasthaken (61) zum lösbaren Eingriff in das den Haltelaschen (41) gegenüber liegende ausgestellte Schenkelende (84) der Montageschiene (8).

6. Anordnung nach Anspruch 1, **dadurch gekennzeichnet, dass** die Rasthaken (61) durch Verschiebung des Schlittens (62) gegen die Haltekraft der Feder (63) aus dem Eingriff mit dem ausgestellten Schenkelende (84) der Montageschiene (8) bringbar sind.

7. Anordnung nach Anspruch 1 oder 6, **gekennzeichnet durch** einen an einen Gehäuserand reichenden Schieber (64) des Schlittens (62) mit einem Eingriff für einen Schraubendreher, einen Haken oder dergleichen.

8. Anordnung nach Anspruch 7, **gekennzeichnet durch** einen im entspannten Zustand der Feder (63) innerhalb eines Gehäuseumrisses befindlichen Schieber (64).

9. Anordnung nach einem der Ansprüche 1 bis 8, **dadurch gekennzeichnet, dass** die Gehäusewand (4) im Randbereich Federlaschen (44) aufweist, dass die Federlaschen zur elektrischen Masseverbindung mit einer weiteren Gehäusewand (50) dienen.

10. Anordnung nach Anspruch 7, **dadurch gekennzeichnet, dass** die Gehäusewand (4) im Bereich des Eingriffs (65) des Schiebers (64) eine Aussparung aufweist, die es ermöglicht, einen Schraubendreher, oder einen Haken oder dergleichen von außerhalb des Gehäuses im Eingriff (65) anzusetzen.

## Claims

1. An arrangement for attaching a housing wall (4) to a mounting rail (8), which has a U-shaped profile (81) with legs (83) and flared leg ends (84), the housing wall (4) comprising at least one retaining clip (41) engaging with one of the flared leg ends (84) and at least one latching hook (61) engaging with the opposing leg end (84) for detachable fixing to the mounting rail (8), at least two positioning clips (42), in each case adjoining a leg (83) and spaced from the at least one retaining clip (41) or the at least one latching hook (61), being provided for fixing the position of the housing wall (4) on the mounting rail (8) as far as possible without play, the latching hooks (61) being attached to a carriage (62) which is displaceable against the retaining force of a spring (63) perpendicularly to the direction of longitudinal extension of the mounting rail (8),
**characterised in that**
the carriage (62) is held displaceably inside the housing on the side of the housing wall (4) remote from the mounting rail, **in that** the housing wall (4) comprises transverse slits (46) arranged perpendicularly to the longitudinal direction of the mounting rail (8), and **in that** the latching hooks (61) pass through the transverse slits (46).

2. An arrangement according to claim 1, **characterised in that** the at least one retaining clip (41) takes the form of a stamped and flared sheet metal clip.

3. An arrangement according to claim 1 or claim 2, **characterised in that** the positioning clips (42) each take the form of stamped and flared sheet metal clips.

4. An arrangement according to any one of claims 1 to 3, **characterised by** two relatively wide, mutually spaced retaining clips (41) for engagement with a flared leg end (84) of the mounting rail (8).

5. An arrangement according to any one of the preceding claims, **characterised by** two mutually spaced latching hooks (61) for detachable engagement with the opposite flared leg end (84) of the mounting rail (8) from the retaining clips (41).

6. An arrangement according to claim 1, **characterised in that** the latching hooks (61) may be brought out of engagement with the flared leg end (84) of the mounting rail (8) by displacement of the carriage (62) against the retaining force of the spring (63).

7. An arrangement according to claim 1 or claim 6, **characterised by** a slider (64), extending as far as a housing edge, of the carriage (62) with an engaging portion for a screwdriver, a hook or the like.

8. An arrangement according to claim 7, **characterised by** a slider (64) located inside a housing outline when the spring (63) is in the relaxed state.

9. An arrangement according to any one of claims 1 to 8, **characterised in that** the housing wall (4) comprises spring clips (44) in the edge area and **in that** the spring clips establish an electrical ground connection with a further housing wall (50).

10. An arrangement according to claim 7, **characterised in that** the housing wall (4) comprises a recess in the area of the engaging portion (65) of the slider (64), which recess makes it possible to position a screwdriver or a hook or the like in the engaging portion (65) from outside the housing.

## Revendications

1. Dispositif de fixation d'une paroi de boîtier (4) sur un rail de montage (8), ayant un profilé en U (81) avec des branches (83) et des extrémités évasées des banches (84), la paroi du boîtier (4) comportant au moins une patte de retenue (41) s'engageant dans une des extrémités évasées des branches (84) et au moins un crochet d'arrêt s'engageant dans l'extrémité de branche opposée (84) en vue de la fixation amovible sur le rail de montage (8), au moins deux pattes de retenue (42) reposant respectivement sur une branche (83) et étant espacées de la au moins une patte de retenue (41) et du au moins un crochet d'arrêt (61) pour assurer une fixation pratiquement exempte de jeu de la paroi du boîtier (4) dans sa position sur le rail de montage (8), les crochets d'arrêt (61) étant fixés dans un chariot (62) pouvant être déplacé contre la force de retenue d'un ressort (63) dans une direction perpendiculaire à la direction d'extension longitudinale du rail de montage (8),
**caractérisé en ce que**
le chariot (62) est retenu de façon mobile dans l'intérieur du boîtier sur le côté de la paroi du boîtier (4) opposé au rail de montage, la paroi du boîtier (41) comportant des fentes transversales perpendiculaires à la direction longitudinale du rail de montage (6) et les crochets d'arrêt (61) étant guidés par les fentes transversales (46).

2. Dispositif selon la revendication 1, **caractérisé en ce que** la au moins une patte de retenue (41) a la forme d'une patte en tôle estampée et évasée.

3. Dispositif selon les revendications 1 ou 2, **caractérisé en ce que** les pattes de positionnement (41) ont respectivement la forme de pattes en tôle estampées et évasées.

4. Dispositif selon l'une des revendications 1 à 3, **caractérisé par** deux pattes de retenue (41) plus larges et mutuellement espacées destinées à s'engager dans une extrémité de branche évasée (84) du rail de montage (8).

5. Dispositif selon l'une des revendications précédentes, **caractérisé par** deux crochets d'arrêt espacés (61) destinés à s'engager de manière amovible dans l'extrémité de branche évasée (84) du rail de montage (8) opposée aux pattes de retenue (41).

6. Dispositif selon la revendication 1, **caractérisé en ce que** les crochets d'arrêt (61) peuvent être dégagés de l'extrémité de branche évasée (84) du rail de montage (8) par un déplacement du chariot (62) contre la force de retenue du ressort (63).

7. Dispositif selon les revendications 1 ou 6, **caractérisé par** un coulisseau (64) du chariot (62) contactant un bord du boîtier, comportant une partie d'engagement pour un tournevis, un crochet ou un outil similaire.

8. Dispositif selon la revendication 7, **caractérisé par** un coulisseau (64) agencé à l'intérieur d'un périmètre du boîtier dans l'état détendu du ressort (63).

9. Dispositif selon l'une des revendications 1 à 8, **caractérisé en ce que** la paroi du boîtier (4) comporte des pattes élastiques (44) dans la région de bordure, les pattes élastiques servant à la connexion électrique à la masse avec une paroi de boîtier additionnelle (50).

10. Dispositif selon la revendication 7, **caractérisé en ce que** la paroi du boîtier (4) comporte dans la région de la partie d'engagement (65) du chariot (64) un évidement permettant d'appliquer dans la partie d'engagement (65) un tournevis, un crochet ou un outil similaire à partir de l'extérieur du boîtier.
